# EUROPEAN PATENT SPECIFICATION

(11) **EP 1 928 975 B1**
(45) Date of publication and mention of the grant of the patent: **04.11.2015**
(21) Application number: 06779199.6
(22) Date of filing: 24.08.2006
(51) Int. Cl.: C09K 8/42, C09K 8/46, C04B 18/16, C04B 28/02

(54) **SETTABLE COMPOSITION COMPRISING CEMENT KILN DUST AND ADDITIVES**
ABBINDBARE ZUSAMMENSETZUNG MIT ZEMENTOFENSTAUB UND ZUSATZSTOFFEN
COMPOSITION DURCISSABLE COMPRENANT DE LA POUSSIÈRE DE FOUR À CIMENT ET DES ADDITIFS

(30) Priority: 09.09.2005 US 223750; 09.09.2005 US 223669
(43) Date of publication of application: 11.06.2008
(60) Divisional application: 15186976.5
(73) Proprietor: HALLIBURTON ENERGY SERVICES, INC., Duncan, OK 73533 (US)
(72) Inventor: RODDY, Craig, W., Duncan, OK 73533 (US); CHATTERJI, Jiten, Duncan, OK 73533 (US); BRENNEIS, Darrell, Chad, Marlow, OK 73055 (US); KING, Bobby, J., Duncan, OK 73533 (US)
(74) Representative: Cottrill, Emily Elizabeth Helen
(86) International application number: PCT/GB2006/003168
(87) International publication number: WO 2007/028952

(56) References cited:
- WO-A-83/01443
- WO-A-03/031364
- US-A- 4 992 102
- US-A1- 2004 262 000
- US-A1- 2005 061 505
- US-A1- 2005 077 045
- US-B1- 6 626 243
- US-B1- 6 708 760

## Description

### BACKGROUND

The present invention relates to settable compositions according to claim 1.

Settable compositions may be used in a variety of subterranean applications. As used herein, the term "settable composition" refers to any composition that over time will set to form a hardened mass. One example of a settable composition comprises hydraulic cement and water. Subterranean applications that may involve settable compositions include, but are not limited to, primary cementing, remedial cementing, and drilling operations. Settable compositions also may be used in surface applications, for example, construction cementing.

Settable compositions may be used in primary cementing operations whereby pipe strings, such as casing and liners, are cemented in well bores. In performing primary cementing, a settable composition may be pumped into an annular space between the walls of a well bore and the pipe string disposed therein. The settable composition sets in the annular space, thereby forming an annular sheath of hardened cement (*e.g.,* a cement sheath) that supports and positions the pipe string in the well bore and bonds the exterior surface of the pipe string to the walls of the well bore.

Settable compositions also may be used in remedial cementing operations, such as sealing voids in a pipe string or a cement sheath. As used herein the term "void" refers to any type of space, including fractures, holes, cracks, channels, spaces, and the like. Such voids may include: holes or cracks in the pipe strings; holes, cracks, spaces, or channels in the cement sheath; and very small spaces (commonly referred to as "microannuli") between the cement sheath and the exterior surface of the well casing or formation. Sealing such voids may prevent the undesired flow of fluids (*e.g*., oil, gas, water, etc.) and/or fine solids into, or from, the well bore.

The sealing of such voids, whether or not made deliberately, has been attempted by introducing a substance into the void and permitting it to remain therein to seal the void. If the substance does not fit into the void, a bridge, patch, or sheath may be formed over the void to possibly produce a termination of the undesired fluid flow. Substances used heretofore in methods to terminate the undesired passage of fluids through such voids include settable compositions comprising water and hydraulic cement, wherein the methods employ hydraulic pressure to force the settable composition into the void. Once placed into the void, the settable composition may be permitted to harden.

Remedial cementing operations also may be used to seal portions of subterranean formations or portions of gravel packs. The portions of the subterranean formation may include permeable portions of a formation and fractures (natural or otherwise) in the formation and other portions of the formation that may allow the undesired flow of fluid into, or from, the well bore. The portions of the gravel pack include those portions of the gravel pack, wherein it is desired to prevent the undesired flow of fluids into, or from, the well bore. A "gravel pack" is a term commonly used to refer to a volume of particulate materials (such as sand) placed into a well bore to at least partially reduce the migration of unconsolidated formation particulates into the well bore. While screenless gravel packing operations are becoming more common, gravel packing operations commonly involve placing a gravel pack screen in the well bore neighboring a desired portion of the subterranean formation, and packing the surrounding annulus between the screen and the well bore with particulate materials that are sized to prevent and inhibit the passage of formation solids through the gravel pack with produced fluids. Among other things, this method may allow sealing of the portion of the gravel pack to prevent the undesired flow of fluids without requiring the gravel pack's removal.

Settable compositions also may be used during the drilling of the well bore in a subterranean formation. For example, in the drilling of a well bore, it may be desirable, in some instances, to change the direction of the well bore. In some instances, settable compositions may be used to facilitate this change of direction, for example, by drilling a pilot hole in a hardened mass of cement, commonly referred to as a "kickoff plug," placed in the well bore.

Certain formations may cause the drill bit to drill in a particular direction. For example, in a vertical well, this may result in an undesirable well bore deviation from vertical. In a directional well (which is drilled at an angle from vertical), after drilling an initial portion of the well bore vertically, the direction induced by the formation may make following the desired path difficult. In those and other instances, special directional drilling tools may be used, such as a whipstock, a bent sub-downhole motorized drill combination, and the like. Generally, the directional drilling tool or tools used may be orientated so that a pilot hole is produced at the desired angle to the previous well bore in a desired direction. When the pilot hole has been drilled for a short distance, the special tool or tools are removed, if required, and drilling along the new path may be resumed. To help ensure that the subsequent drilling follows the pilot hole, it may be necessary to drill the pilot hole in a kickoff plug, placed in the well bore. In those instances, prior to drilling the pilot hole, a settable composition may be introduced into the well bore and allowed to set to form a kickoff plug therein. The pilot hole then may be drilled in the kickoff plug, and the high strength of the kickoff plug helps ensure that the subsequent drilling proceeds in the direction of the pilot hole.

Settable compositions used heretofore commonly comprise Portland cement. Portland cement generally is a major component of the cost for the settable compositions. To reduce the cost of such settable compositions, other components may be included in the settable composition in addition to, or in place of, the Portland cement. Such components may include fly ash, slag cement, shale, metakaolin, micro-fine cement, and the like. "Fly ash," as that term is used herein, refers to the residue from the combustion of powdered or ground coal, wherein the fly ash carried by the flue gases may be recovered, for example, by electrostatic precipitation. "Slag," as that term is used herein, refers to a granulated, blast furnace by-product formed in the production of cast iron and generally comprises the oxidized impurities found in iron ore. Slag cement generally comprises slag and a base, for example, such as sodium hydroxide, sodium bicarbonate, sodium carbonate, or lime, to produce a settable composition that, when combined with water, may set to form a hardened mass.

During the manufacture of cement, a waste material commonly referred to as "CKD" is generated. "CKD," as that term is used herein, refers to a partially calcined kiln feed which is removed from the gas stream and collected in a dust collector during the manufacture of cement. Usually, large quantities of CKD are collected in the production of cement that are commonly disposed of as waste. Disposal of the waste CKD can add undesirable costs to the manufacture of the cement, as well as the environmental concerns associated with its disposal. The chemical analysis of CKD from various cement manufactures varies depending on a number of factors, including the particular kiln feed, the efficiencies of the cement production operation, and the associated dust collection systems. CKD generally may comprise a variety of oxides, such as SiO₂, Al₂O₃, Fe₂O₃, CaO, MgO, SO₃, Na₂O, and K₂O.

### SUMMARY

The present invention provides a settable compositon as defined by claim 1.

The features and advantages of the present invention will be apparent to those skilled in the art. It will be appreciated that the invention may be modified within the scope of the appended claims.

### DESCRIPTION OF PREFERRED EMBODIMENTS

The present invention relates to settable compositions according to claim 1. The settable compositions of the present invention may be used in a variety of subterranean applications, including primary cementing, remedial cementing, and drilling operations. The settable compositions of the present invention also may be used in surface applications, for example, construction cementing.

### Settable Compositions of the Present Invention

The settable compositions of the present invention has a density of 13.3 pounds per gallon ("ppg") [1600 kg/m³]

The water used in the settable compositions of the present invention may include freshwater, saltwater (*e.g*., water containing one or more salts dissolved therein), brine (e.g., saturated saltwater produced from subterranean formations), seawater, or combinations thereof. Generally, the water may be from any source, provided that it does not contain an excess of compounds that may adversely affect other components in the settable composition. As used herein, the term "by weight," when used herein to refer to the percent of a component in the settable composition, means by weight included in the settable compositions of the present invention relative to the weight of the dry components in the settable composition.

The CKD is present in the settable compositions of the present invention in an amount of 25% by weight.

The settable compositions of the present invention comprise Portland cement.. The Portland cement used in the present invention is classified as Class A cement according to American Petroleum Institute, API Specification for Materials and Testing for Well Cements, API Specification 10, Fifth Ed., July 1, 1990.

The Portland cement is present in the settable compositions of the present invention in an amount of 50% by weight.

The settable compositions of the present invention comprise zeolite. Zeolites generally are porous alumino-silicate minerals that may be either a natural or synthetic material. Synthetic zeolites are based on the same type of structural cell as natural zeolites, and may comprise aluminosilicate hydrates. As used herein, the term "zeolite" refers to all natural and synthetic forms of zeolite.

In certain embodiments, suitable zeolites for use in the present invention may include "analcime" (which is hydrated sodium aluminum silicate), "bikitaite" (which is lithium aluminum silicate), "brewsterite" (which is hydrated strontium barium calcium aluminum silicate), "chabazite" (which is hydrated calcium aluminum silicate), "clinoptilolite" (which is hydrated sodium aluminum silicate), "faujasite" (which is hydrated sodium potassium calcium magnesium aluminum silicate), "harmotome" (which is hydrated barium aluminum silicate), "heulandite" (which is hydrated sodium calcium aluminum silicate), "laumontite" (which is hydrated calcium aluminum silicate), "mesolite" (which is hydrated sodium calcium aluminum silicate), "natrolite" (which is hydrated sodium aluminum silicate), "paulingite" (which is hydrated potassium sodium calcium barium aluminum silicate), "phillipsite" (which is hydrated potassium sodium calcium aluminum silicate), "scolecite" (which is hydrated calcium aluminum silicate), "stellerite" (which is hydrated calcium aluminum silicate), "stilbite" (which is hydrated sodium calcium aluminum silicate), and "thomsonite" (which is hydrated sodium calcium aluminum silicate), and combinations thereof. In certain embodiments, suitable zeolites for use in the present invention include chabazite and clinoptilolite. An example of a suitable source of zeolite is available from the C2C Zeolite Corporation of Calgary, Canada.

The zeolite is present in an amount of 25% by weight.

### Methods

The settable compositions of the present invention may be used in a variety of subterranean applications, including, but not limited to, primary cementing, remedial cementing, and drilling operations. The settable compositions of the present invention also may be used in surface applications, for example, construction cementing.
An example of a method comprises providing a settable composition according to claim 1; placing the settable composition in a location to be cemented; and allowing the settable composition to set therein. In some embodiments, the location to be cemented may be above ground, for example, in construction cementing. The location to be cemented may be in a subterranean formation, for example, in subterranean applications.

Another example of a method is a method of cementing a pipe string (e.g., casing, expandable casing, liners, etc.) disposed in a well bore. An example of such a method may comprise providing a settable composition comprising water and CKD; introducing the settable composition into the annulus between the pipe string and a wall of the well bore; and allowing the settable composition to set in the annulus to form a hardened mass. Generally, in most instances, the hardened mass should fix the pipe string in the well bore.

Another example of a method is method of sealing a portion of a gravel pack or a portion of a subterranean formation. An example of such a method may comprise providing a settable composition comprising water and CKD; introducing the settable composition into the portion of the gravel pack or the portion of the subterranean formation; and allowing the settable composition to form a hardened mass in the portion. The portions of the subterranean formation may include permeable portions of the formation and fractures (natural or otherwise) in the formation and other portions of the formation that may allow the undesired flow of fluid into, or from, the well bore. The portions of the gravel pack include those portions of the gravel pack, wherein it is desired to prevent the undesired flow of fluids into, or from, the well bore. Among other things, this method may allow the sealing of the portion of the gravel pack to prevent the undesired flow of fluids without requiring the gravel pack's removal.

Another example of a method is a method of sealing voids located in a pipe string (e.g., casing, expandable casings, liners, etc.) or in a cement sheath. Generally, the pipe string will be disposed in a well bore, and the cement sheath may be located in the annulus between the pipe string disposed in the well bore and a wall of the well bore. An example of such a method may comprise providing a settable composition comprising water and CKD; introducing the settable composition into the void; and allowing the settable composition to set to form a hardened mass in the void.

When sealing a void in a pipe string, the methods further may comprise locating the void in the pipe string; and isolating the void by defining a space within the pipe string in communication with the void; wherein the settable composition may be introduced into the void from the space. The void may be isolated using any suitable technique and/or apparatus, including bridge plugs, packers, and the like. The void in the pipe string may be located using any suitable technique.

When sealing a void in the cement sheath, the methods further may comprise locating the void in the cement sheath; producing a perforation in the pipe string that intersects the void; and isolating the void by defining a space within the pipe string in communication with the void via the perforation, wherein the settable composition is introduced into the void via the perforation. The void in the pipe string may be located using any suitable technique. The perforation may be created in the pipe string using any suitable technique, for example, perforating guns. The void may be isolated using any suitable technique and/or apparatus, including bridge plugs, packers, and the like.

Another example of a method is a method of changing the direction of drilling a well bore. An example of such a method may comprise providing a settable composition comprising CKD; introducing the settable composition into the well bore at a location in the well bore wherein the direction of drilling is to be changed; allowing the settable composition to set to form a kickoff plug in the well bore; drilling a hole in the kickoff plug; and drilling of the well bore through the hole in the kickoff plug.

Generally, the drilling operation should continue in the direction of the hole drilled through the kickoff plug. The well bore and hole in the kickoff plug may be drilled using any suitable technique, including rotary drilling, cable tool drilling, and the like. One or more oriented directional drilling tools may be placed adjacent to the kickoff plug. Suitable directional drilling tools include, but are not limited to, whip-stocks, bent sub-downhole motorized drill combinations, and the like. The direction drilling tools then may be used to drill the hole in the kickoff plug so that the hole is positioned in the desired direction. Optionally, the directional drilling tool may be removed from the well bore subsequent to drilling the hole in the kickoff plug.

To facilitate a better understanding of the present invention, the following examples of certain aspects of some embodiments are given. In no way should the following examples be read to limit, or define, the scope of the invention.

### EXAMPLE 1

A series of comparative sample settable compositions were prepared at room temperature and subjected to 48-hour compressive strength tests at 140°F (60°C) in accordance with API Specification 10. The comparative sample compositions comprised water, Class A CKD, and Class A Portland cement.

The results of the compressive strength tests are set forth in the table below.

**TABLE 1**

| **Unfoamed Compressive Strength Tests: Class A Cement and Class A CKD** | | | | |
|---|---|---|---|---|
| **Sample** | **Density (ppg)** | **Portland Cement Class A** | **CKD Class A** | **48-Hour Compressive Strength at 140°F [60°C]** |
| | **[kg/m³]** | **(% by wt)** | **(% by wt)** | **(psi) [MPa]** |
| No. 1 | 14 [1700] | 0 | 100 | 228 [1.57] |
| No. 2 | 15.15 [1815] | 25 | 75 | 701 [4.83] |
| No. 3 | 14.84 [1778] | 50 | 50 | 1,189 [8.198] |
| No. 4 | 15.62 [1872] | 75 | 25 | 3,360 [23.17] |
| No. 5 | 15.6 [1870] | 100 | 0 | 2,350 [16.20] |

### EXAMPLE 2

Comparative Sample Compositions No. 6 and 7 were prepared at room temperature and subjected to thickening time and fluid loss tests at 140°F (60°C) and 240°F (116°C), respectively, in accordance with API Specification 10.

Comparative Sample Composition No. 6 comprised water, Class A Portland Cement (50% by weight), Class A CKD (50% by weight), "HALAD^{®} 23" fluid loss control additive (0.75% by weight), and "HR^{®}-5" set retarder (0.25% by weight). Accordingly, Comparative Sample Composition No. 6 had a Portland cement-to-CKD weight ratio of about 50:50. This Sample had a density of 14.84 ppg [1778 kg/m³]. "HALAD^{®} 23" additive is a cellulose-based fluid loss control additive that is commercially available from Halliburton Energy Services, Inc., Duncan, Oklahoma. "HR^{®}-5" retarder is a lignosulfonate set retarder that is commercially available from Halliburton Energy Services, Inc., Duncan, Oklahoma.

Comparative Sample Composition No. 7 comprised water, Class A Portland Cement (50% by weight), Class A CKD (50% by weight), "HALAD^{®} 413" fluid loss control additive (0.75% by weight), and "HR^{®}-12" set retarder (0.3% by weight). Accordingly, Sample Composition No. 7 had a Portland cement-to-CKD weight ratio of 50:50. This Sample had a density of 14.84 ppg (1778 kg/m³). "HALAD^{®} 413" additive is a grafted copolymer fluid loss control additive that is commercially available from Halliburton Energy Services, Inc., Duncan, Oklahoma. "HR^{®}-12" retarder is a mixture of a lignosulfonate and hydroxycarboxy acid set retarder that is commercially available from Halliburton Energy Services, Inc., Duncan, Oklahoma.

The results of the fluid loss and thickening time tests are set forth in the table below.

**TABLE 2**

| **Unfoamed Thickening Time and Fluid Loss Tests: Class A Cement and Class A CKD** | | | | |
|---|---|---|---|---|
| **Sample** | **Cement-to-CKD Weight** | **Test Temperature** | **Thickening Time to 70 BC** | **API Fluid Loss in 30 min** |
| | **Ratio** | **(°F)** | **(min:hr)** | **(ml)** |
| No. 6 | 50:50 | 140 [60°C] | 6:06 | 147 |
| No. 7 | 50:50 | 240 [116°C] | 2:20 | 220 |

### EXAMPLE 3

A series of comparative sample settable compositions were prepared at room temperature and subjected to 48-hour compressive strength tests at 140°F (60°C) in accordance with API Specification 10. The comparative sample compositions comprised water, Class H CKD, and Class H Portland cement.

The results of the compressive strength tests are set forth in the table below.

**TABLE 3**

| **Unfoamed Compressive Strength Tests: Class H Cement and Class H CKD** | | | | |
|---|---|---|---|---|
| **Sample** | **Density (ppg)** | **Portland Cement Class H** | **CKD Class H** | **48-Hour Compressive Strength at 140°F [60°C]** |
| | **[kg/m³]** | **(% by wt)** | **(% by wt)** | **(psi) [MPa]** |
| No. 8 | 15.23 [1825] | 0 | 100 | 74.9 [0.516] |
| No. 9 | 15.4 [1850] | 25 | 75 | 544 [3.75] |
| No. 10 | 16 [1900] | 50 | 50 | 1,745 [12.03] |
| No. 11 | 16.4 [1970] | 75 | 25 | 3,250 [22.41] |
| No. 12 | 16.4 [1970] | 100 | 0 | 1,931 [13.31] |

### EXAMPLE 4

Comparative Sample Compositions No. 13 and 14 were prepared at room temperature and subjected to thickening time and fluid loss tests at 140°F (60°C) and 240°F (116°C), respectively, in accordance with API Specification 10.

Comparative Sample Composition No. 13 comprised water, Class H Portland Cement (50% by weight), Class H CKD (50% by weight), "HALAD^{®} 23" fluid loss control additive (0.75% by weight), and 0.25% by weight "HR^{®}-5" set retarder (0.25% by weight). Accordingly, Sample Composition No. 13 had a Portland cement-to-CKD weight ratio of about 50:50. This Sample had a density of 16 ppg (1900 kg/m³).

Comparative Sample Composition No. 14 comprised water, Class H Portland Cement (50% by weight), Class H CKD (50% by weight), "HALAD^{®} 413" fluid loss control additive (0.75% by weight), and "HR^{®}-12" set retarder (0.3% by weight). Accordingly, Sample Composition No. 14 had a Portland cement-to-CKD weight ratio of about 50:50. This Sample had a density of 16 ppg (1900 kg/m³).

The results of the fluid loss and thickening time tests are set forth in the table below.

**TABLE 4**

| **Unfoamed Thickening Time and Fluid Loss Tests: Class H Cement and Class H CKD** | | | | |
|---|---|---|---|---|
| **Sample** | **Cement-to-CKD Weight Ratio** | **Test Temperature** | **Thickening Time to 70 BC** | **API Fluid Loss in 30 min** |
| | | **(°F) [°C]** | **(min:hr)** | **(ml)** |
| No. 13 | 50:50 | 140 [60] | 5:04 | 58 |
| No. 14 | 50:50 | 240 [116] | 1:09 | 220 |

### EXAMPLE 5

A series of comparative sample settable compositions were prepared at room temperature and subjected to 48-hour compressive strength tests at 140°F (60°C) in accordance with API Specification 10. The comparative sample compositions comprised water, Class G CKD, and Class G Portland cement.

The results of the compressive strength tests are set forth in the table below.

**TABLE 5**

| **Unfoamed Compressive Strength Tests: Class G Cement and Class G CKD** | | | | |
|---|---|---|---|---|
| **Sample** | **Density** | **Portland Cement Class G** | **CKD Class G** | **48-Hour Compressive Strength at 140°F [60°C]** |
| | **(ppg) [kg/m³** | **(% by wt)** | **(% by wt)** | **(psi) [MPa]** |
| No. 15 | 14.46 [1733] | 0 | 100 | 371 [2.56] |
| No. 16 | 14.47 [1734] | 25 | 75 | 601 [4.14] |
| No. 17 | 14.49 [1736] | 50 | 50 | 1,100 [7.6] |
| No. 18 | 14.46 [1733] | 75 | 25 | 3,160 [21.79] |
| No. 19 | 14.46 [1733] | 100 | 0 | 3,880 [26.75] |

### EXAMPLE 6

Comparative Sample Compositions No. 20 and 21 were prepared at room temperature and subjected to thickening time and fluid loss tests at 140°F (60°C) and 240°F (116°C), respectively, in accordance with API Specification 10.

Comparative Sample Composition No. 20 comprised water, Class G Portland Cement (50% by weight), Class G CKD (50% by weight), "HALAD^{®} 23" fluid loss control additive (0.75% by weight), and "HR^{®}-5" set retarder (0.25% by weight). Accordingly, Sample Composition No. 20 had a Portland cement-to-CKD weight ratio of about 50:50. This Sample had a density of 15.23 ppg [1825 kg/m³].

Comparative Sample Composition No. 21 comprised water, Class G Portland Cement (50% by weight), Class G CKD (50% by weight), "HALAD^{®} 413" fluid loss control additive (0.75% by weight), and "HR^{®}-12" set retarder (0.3% by weight). Accordingly, Sample Composition No. 21 had a Portland cement-to-CKD weight ratio of about 50:50. This Sample had a density of 15.23 ppg [1825 kg/m³].

The results of the fluid loss and thickening time tests are set forth in the table below.

**TABLE 6**

| **Unfoamed Thickening Time and Fluid Loss Tests: Class G Cement and Class G CKD** | | | | |
|---|---|---|---|---|
| **Sample** | **Cement-to-CKD Weight Ratio** | **Test Temperature** | **Thickening Time to 70 BC** | **API Fluid Loss in 30 min** |
| | | **(°F) [°C]** | **(min:hr)** | **(ml)** |
| No. 20 | 50:50 | 140 [60] | 3:19 | 132 |
| No. 21 | 50:50 | 240 [116] | 1:24 | 152 |

Accordingly, Examples 1-6 indicate that settable compositions comprising Portland cement and CKD may have suitable thickening times, compressive strengths, and/or fluid loss properties for a particular application.

### EXAMPLE 7

A series of comparative foamed sample compositions were prepared in accordance with the following procedure. For each sample, a base sample composition was prepared that comprised water, Class A Portland cement, and Class A CKD. The amounts of CKD and Portland cement were varied as shown in the table below. "ZONESEAL^{®} 2000" foaming additive was then added to each base sample composition in an amount of 2% bvow. Next, each base sample composition was foamed down to about 12 ppg (1400 kg/m³). After preparation, the resulting foamed sample compositions were subjected to 72-hour compressive strength tests at 140°F (60°C) in accordance with API Specification 10.

The results of the compressive strength tests are set forth in the table below.

**TABLE 7**

| **Foamed Compressive Strength Test: Class A Cement and Class A CKD** | | | | | |
|---|---|---|---|---|---|
| **Sample** | **Base Density (ppg)** | **Foam Density (ppg)** | **Portland Cement Class A** | **CKD Class A** | **72-Hour Compressive Strength at 140°F [60°C]** |
| | **[kg/m³]** | **[kg/m³]** | **(% by wt)** | **(% by wt)** | **(psi) [MPa]** |
| No. 22 | 14.34 [1718] | 12 [1400] | 0 | 100 | 167.6 [1.156] |
| No. 23 | 14.15 [1696] | 12 [1400] | 25 | 75 | 701 [4.83] |
| No. 24 | 15.03 [1801] | 12 [1400] | 50 | 50 | 1,253 [8.639] |
| No. 25 | 15.62 [1872] | 12 [1400] | 75 | 25 | 1,322 [9.115] |
| No. 26 | 15.65 [1875] | 12 [1400] | 100 | 0 | 1,814 [12.51] |

### EXAMPLE 8

A series of comparative foamed sample compositions were prepared in accordance with the following procedure. For each sample, a base sample composition was prepared that comprised water, Class H Portland cement, and Class H CKD. The amounts of CKD and Portland cement were varied as shown in the table below. "ZONESEAL^{®} 2000" foaming additive was then added to each base sample composition in an amount of 2% bvow. Next, each base sample composition was foamed down to about 12 ppg (1400 kg/m³). After preparation, the resulting foamed sample compositions were subjected to 72-hour compressive strength tests at 140°F (60°C) in accordance with API Specification 10.

The results of the compressive strength tests are set forth in the table below.

**TABLE 8**

| **Foamed Compressive Strength Tests: Class H Cement and Class H CKD** | | | | | |
|---|---|---|---|---|---|
| **Sample** | **Base Density (ppg)** | **Foam Density (ppg)** | **Portland Cement Class H** | **CKD Class H** | **72-Hour Compressive Strength at 140°F [60°C]** |
| | **[kg/m³]** | **[kg/m³]** | **(% by wt)** | **(% by wt)** | **(psi) [MPa]** |
| No. 27 | 15.07 [1806] | 12 [1400] | 0 | 100 | 27.2 [0.188] |
| No. 28 | 15.4 [1850] | 12 [1400] | 25 | 75 | 285 [1.97] |
| No. 29 | 16 [1900] | 12 [1400] | 50 | 50 | 845 [5.83] |
| No. 30 | 16.4 [1970] | 12 [1400] | 75 | 25 | 1,458 [10.05] |
| No. 31 | 16.57 [1986] | 12 [1400] | 100 | 0 | 1,509 [10.40] |

### EXAMPLE 9

A series of comparative foamed sample compositions were prepared in accordance with the following procedure. For each sample, a base sample composition was prepared that comprised water, Class G Portland cement, and Class G CKD. The amounts of CKD and Portland cement were varied as shown in the table below. "ZONESEAL^{®} 2000" foaming additive was then added to each base sample composition in an amount of 2% bvow. Next, each base sample composition was foamed down to about 12 ppg [1400 kg/m³]. After preparation, the resulting foamed sample compositions were subjected to 72-hour compressive strength tests at 140°F [60°C] in accordance with API Specification 10.

The results of the compressive strength tests are set forth in the table below.

**TABLE 9**

| **Foamed Compressive Strength Tests: Class G Cement and Class G CKD** | | | | | |
|---|---|---|---|---|---|
| **Sample** | **Base Density (ppg)** | **Foam Density (ppg)** | **Portland Cement Class G** | **CKD Class G** | **72-Hour Compressive Strength at 140°F [60°C]** |
| | **[kg/m³]** | **[kg/m³]** | **(% by wt)** | **(% by wt)** | **(psi) [MPa]** |
| No. 32 | 14.32 [1716] | 12 [1400] | 0 | 100 | 181 [1.25] |
| No. 33 | 14.61 [1751] | 12 [1400] | 25 | 75 | 462 [3.19] |
| No. 34 | 15 [1800] | 12 [1400] | 50 | 50 | 729 [5.03] |
| No. 35 | 15.43 [1849] | 12 [1400] | 75 | 25 | 1,196 [8.246] |
| No. 36 | 15.91 91906] | 12 [1400] | 100 | 0 | 1,598 [11.02] |

Accordingly, Examples 7-9 indicate that foamed settable compositions comprising Portland cement and CKD may have suitable compressive strengths for a particular application.

### EXAMPLE 10

A series of comparative settable compositions were prepared at room temperature and subjected to 24-hour compressive strength tests at 140°F [60°C] in accordance with API Specification 10. Sufficient water was included in each sample to provide a density of about 14.2 ppg [1700 kg/m³].

The results of the compressive strength tests are set forth in the table below.

**TABLE 10**

| **Unfoamed Compressive Strength Tests Class A Cement, Class A CKD, Shale, Fly Ash, and Lime** | | | | | | |
|---|---|---|---|---|---|---|
| **Sample** | **Portland Cement Class A** | **CKD Class A** | **Vitrified Shale¹** | **POZMIZ^{®} A Additive** | **Hydrated Lime** | **24-Hour Compressive Strength at 140°F [60°C]** |
| | **(% by wt)** | **(% by wt)** | **(% by wt)** | **(% by wt)** | **(% by wt)** | **(psi) [MPa]** |
| No. 37 | 26 | 0 | 0 | 61 | 13 | 1,024 [7.060] |
| No. 38 | 19.5 | 6.5 | 0 | 61 | 13 | 766 [5.28] |
| No. 39 | 20.7 | 5.3 | 0 | 61 | 13 | 825 [5.69] |
| No. 40 | 23.3 | 2.7 | 0 | 61 | 13 | 796 [5.49] |
| No. 41 | 19.4 | 3.3 | 3.3 | 61 | 13 | 717 [4.94] |
| No. 42 | 20.7 | 2.65 | 2.65 | 61 | 13 | 708 [4.88] |
| No. 43 | 23.3 | 1.35 | 1.35 | 61 | 13 | 404 [2.79] |

| | | | | | | |
|---|---|---|---|---|---|---|
| ¹ The vitrified shale used was "PRESSUR-SEAL^{®} FINE LCM" material. | | | | | | |

### EXAMPLE 11

A series of comparative compositions were prepared and subjected to thickening time tests at 140°F (60°C) in accordance with API Specification 10.

Comparative Sample Composition No. 44 comprised water, Class A Portland Cement (26% by weight), "POZMIX^{®} A" cement additive (61% by weight), hydrated lime (13% by weight), "HALAD^{®} 23" fluid loss control additive (0.6% by weight), and "HR^{®}-5" set retarder (0.1% by weight). This Sample had a density of 14.2 ppg [1700 kg/m³].

Comparative Sample Composition No. 45 comprised water, Class A Portland Cement (19.5% by weight), Class A CKD (6.5% by weight), "POZMIX^{®} A" cement additive (61% by weight), hydrated lime (13% by weight), "HALAD^{®} 23" fluid loss control additive (0.6% by weight), and "HR^{®}-5" set retarder (0.1% by weight). This Sample had a density of 14.2 ppg [1700 kg/m³]. The vitrified shale was "PRESSUR-SEAL^{®} FINE LCM" material.

Comparative Sample Composition No. 46 comprised water, Class A Portland Cement (19.5% by weight), Class A CKD (3.25% by weight), vitrified shale (3.25% by weight), "POZMIX^{®} A" cement additive (61% by weight), hydrated lime (13% by weight), "HALAD^{®} 23" fluid loss control additive (0.6% by weight), and "HR^{®}-5" set retarder (0.1% by weight). This Sample had a density of 14.2 ppg [1700kg/m³]. The vitrified shale was "PRESSUR-SEAL^{®} FINE LCM" material.

The results of the fluid loss and thickening time tests are set forth in the table below.

**TABLE 11**

| **Unfoamed Thickening Time Tests: Class A Cement, Class A CKD, Shale, Fly ash, and Lime** | | | | | | |
|---|---|---|---|---|---|---|
| **Sample** | **Portland Cement Class A** | **CKD Class A** | **Vitrified Shale¹** | **POZMIX^{®} A Additive** | **Hydrated Lime** | **Thickening Time to 70 BC at 140°F [60°C]** |
| | **(% by wt)** | **(% by wt)** | **(% by wt)** | **(% by wt)** | **(% by wt)** | **(min:hr)** |
| No. 44* | 26 | 0 | 0 | 61 | 13 | 2:57 |
| No. 45* | 19.5 | 6.5 | 0 | 61 | 13 | 2:20 |
| No. 46 | 19.5 | 3.25 | 3.25 | 61 | 13 | 3:12 |

| | | | | | | |
|---|---|---|---|---|---|---|
| ¹ The vitrified shale used was "PRESSUR-SEAL^{®} FINE LCM" material. | | | | | | |

### EXAMPLE 12

A series of comparative settable compositions were prepared at room temperature and subjected to 24-hour compressive strength tests at 140°F [60°C] in accordance with API Specification 10. Sufficient water was included in each sample to provide a density of about 14.2 ppg [1700kg/m³].

The results of the compressive strength tests are set forth in the table below.

**TABLE 12**

| **Unfoamed Compressive Strength Tests: Class H Cement, Class H CKD, Shale, Fly ash, and Lime** | | | | | | |
|---|---|---|---|---|---|---|
| **Sample** | **Portland Cement Class H** | **CKD Class H** | **Vitrified Shale¹** | **POZMIX^{®} A Additive** | **Hydrated Lime** | **24-Hour Compressive Strength at 140°F [60°C]** |
| | **(% by wt)** | **(% by wt)** | **(% by wt)** | **(% by wt)** | **(% by wt)** | **(psi) [MPa]** |
| No. 47 | 26 | 0 | 0 | 61 | 13 | 704 [4.86] |
| No. 48 | 19.5 | 6.5 | 0 | 61 | 13 | 576 [3.97] |
| No. 49 | 20.7 | 5.3 | 0 | 61 | 13 | 592 [4.08] |
| No. 50 | 23.3 | 2.7 | 0 | 61 | 13 | 627 [4.32] |
| No. 51 | 19.4 | 3.3 | 3.3 | 61 | 13 | 626 [4.32] |
| No. 52 | 20.7 | 2.65 | 2.65 | 61 | 13 | 619 [4.27] |
| No. 53 | 23.3 | 1.35 | 1.35 | 61 | 13 | 594 [4.10] |

| | | | | | | |
|---|---|---|---|---|---|---|
| ¹ The vitrified shale used was "PRESSUR-SEAL^{®} FINE LCM" material. | | | | | | |

### EXAMPLE 14

A series of comparative settable compositions were prepared at room temperature and subjected to 24-hour compressive strength tests at 140°F [60°C] in accordance with API Specification 10. Sufficient water was included in each sample to provide a density of about 14.2 ppg [1700 kg/m³].

The results of the compressive strength tests are set forth in the table below.

**TABLE 14**

| **Unfoamed Compressive Strength Tests: Class G Cement, Class G CKD, Shale, Fly ash, and Lime** | | | | | | |
|---|---|---|---|---|---|---|
| **Sample** | **Portland Cement Class G** | **CKD Class G** | **Vitrified Shale¹** | **POZMIX^{®} A Additive** | **Hydrated Lime** | **24-Hour Compressive Strength at 140°F [60°C]** |
| | **(% by wt)** | **(% by wt)** | **(% by wt)** | **(% by wt)** | **(% by wt)** | **(psi)** |
| No. 55 | 26 | 0 | 0 | 61 | 13 | 491 [3.39] |
| No. 56 | 19.5 | 6.5 | 0 | 61 | 13 | 526 [3.63] |
| No. 57 | 20.7 | 5.3 | 0 | 61 | 13 | 474 [3.27] |
| No. 58 | 23.3 | 2.7 | 0 | 61 | 13 | 462 [3.19] |
| No. 59 | 19.4 | 3.3 | 3.3 | 61 | 13 | 523 [3.61] |
| No. 60 | 20.7 | 2.65 | 2.65 | 61 | 13 | 563 [3.88] |

| | | | | | | |
|---|---|---|---|---|---|---|
| ¹ The vitrified shale used was "PRESSUR-SEAL^{®} FINE LCM" material. | | | | | | |

Accordingly, Examples 10-14 indicate that settable compositions comprising Portland cement, CKD, fly ash, hydrated lime, and optionally vitrified shale may have suitable compressive strengths, thickening times, and/or fluid loss properties for a particular application.

### EXAMPLE 15

A series of comparative foamed sample compositions were prepared in accordance with the following procedure. For each sample, a base sample composition was prepared that comprised water, Class A Portland cement, Class A CKD, vitrified shale, "POZMIX^{®} A" cement additive (61% by weight), and hydrated lime (13% by weight). This Sample had a density of 14.2 ppg [1700 kg/m³]. The vitrified shale used was "PRESSUR-SEAL^{®} FINE LCM" material. The amounts of CKD, Portland cement, and vitrified shale were varied as shown in the table below. "ZONESEAL^{®} 2000" foaming additive was then added to each base sample composition in an amount of 2% bvow. Next, each base sample composition was foamed down to about 12 ppg [1400 kg/m³]. After preparation, the resulting foamed sample compositions were subjected to 10-day compressive strength tests at 140°F [60°C] in accordance with API Specification 10.

The results of the compressive strength tests are set forth in the table below.

**TABLE 15**

| **Foamed Compressive Strength Tests: Class A Cement, Class A CKD, Shale, Fly ash, and Lime** | | | | | | |
|---|---|---|---|---|---|---|
| **Sample** | **Portland Cement Class A** | **CKD Class A** | **Vitrified Shale¹** | **POZMIX^{®} A Additive** | **Hydrated Lime** | **10-Day Compressive Strength at 140°F [60°C]** |
| | **(% by wt)** | **(% by wt)** | **(% by wt)** | **(% by wt)** | **(% by wt)** | **(psi) [MPa]** |
| No. 61 | 26 | 0 | 0 | 61 | 13 | 1,153 [7.950] |
| No. 62 | 19.5 | 6.5 | 0 | 61 | 13 | 1,151 [7.936] |
| No. 63 | 20.7 | 5.3 | 0 | 61 | 13 | 1,093 [7.536] |
| No. 64 | 23.3 | 2.7 | 0 | 61 | 13 | 950 [6.6] |
| No. 65 | 19.4 | 3.3 | 3.3 | 61 | 13 | 1,161 [8.005] |
| No. 66 | 20.7 | 2.65 | 2.65 | 61 | 13 | 1,009 [6.957] |
| No. 67 | 23.3 | 1.35 | 1.35 | 61 | 13 | 1,231 [8.487] |

| | | | | | | |
|---|---|---|---|---|---|---|
| ¹ The vitrified shale used was "PRESSUR-SEAL^{®} FINE LCM" material. | | | | | | |

### EXAMPLE 16

A series of comparative foamed sample compositions were prepared in accordance with the following procedure. For each sample, a base sample composition was prepared that comprised water, Class A Portland cement, Class A CKD, vitrified shale, "POZMIX^{®} A" cement additive (61% by weight), and hydrated lime (13% by weight). This Sample had a density of 14.2 ppg [1700 kg/m³]. The vitrified shale used was "PRESSUR-SEAL^{®} FINE LCM" material. The amounts of CKD, Portland cement, and vitrified shale were varied as shown in the table below. "ZONESEAL^{®} 2000" foaming additive was then added to each base sample composition in an amount of 2% bvow. Next, each base sample composition was foamed down to about 12 ppg [1400 kg/m³]. After preparation, the resulting foamed sample compositions were subjected to 72-hour compressive strength tests at 140°F [60°C] in accordance with API Specification 10.

The results of the compressive strength tests are set forth in the table below.

**TABLE 16**

| **Foamed Compressive Strength Tests: Class A Cement, Class A CKD, Shale, Fly Ash, and Lime** | | | | | | |
|---|---|---|---|---|---|---|
| **Sample** | **Portland Cement Class A** | **CKD Class A** | **Vitrified Shale¹** | **POZMIX^{®} A Additive** | **Hydrated Lime** | **72-Hour Compressive Strength at 140°F [60°C]** |
| | **(% by wt)** | **(% by wt)** | **(% by wt)** | **(% by wt)** | **(% by wt)** | **(psi) [MPa]** |
| No. 68 | 26 | 0 | 0 | 61 | 13 | 1,057 [7.288] |
| No. 69 | 19.5 | 6.5 | 0 | 61 | 13 | 969 [6.68] |
| No. 70 | 20.7 | 5.3 | 0 | 61 | 13 | 984 [6.78] |
| No. 71 | 19.4 | 3.3 | 3.3 | 61 | 13 | 921 [6.35] |
| No. 72 | 20.7 | 2.65 | 2.65 | 61 | 13 | 811 [5.59] |
| No. 73 | 23.3 | 1.35 | 1.35 | 61 | 13 | 969 [6.68] |

| | | | | | | |
|---|---|---|---|---|---|---|
| ¹ The vitrified shale used was "PRESSUR-SEAL^{®} FINE LCM" material. | | | | | | |

### EXAMPLE 17

Comparative Foamed Sample Composition No. 74 was prepared in accordance with the following procedure. A base sample composition was prepared that comprised water, Class G Portland cement (19.5% by weight), Class G CKD (6.5% by weight), "POZMIX^{®} A" cementadditive (61% by weight), and hydrated lime (13% by weight). This base sample had a density of 14.2 ppg [1700 kg/m³]. "ZONESEAL^{®} 2000" foaming additive was then added to each base sample composition in an amount of 2% bvow. Next, the base sample was foamed down to about 12 ppg [1400 kg/m³]. After preparation, the resulting Foamed Sample Composition was subjected to a 72-hour compressive strength test at 140°F [60°C] in accordance with API Specification 10.

The result of the compressive strength test is set forth in the table below.

**TABLE 17**

| **Foamed Compressive Strength Tests: Class G Cement, Class G CKD, Fly Ash, and Lime** | | | | | |
|---|---|---|---|---|---|
| **Sample** | **Portland Cement Class G** | **CKD Class G** | **POZMIX^{®} A Additive** | **Hydrated Lime** | **72-Hour Compressive Strength at 140°F [60°C]** |
| | **(by wt)** | **(by wt)** | **(by wt)** | **(by wt)** | **(psi) [MPa]** |
| No. 74 | 19.5 | 6.5 | 61 | 13 | 777 [5.36] |

Accordingly, Examples 15-17 indicate that foamed settable compositions comprising Portland cement, CKD, fly ash, hydrated lime, and optionally vitrified shale may have suitable compressive strengths for a particular application.

### EXAMPLE 18

A series of sample settable compositions were prepared at room temperature and subjected to 24-hour compressive strength tests at 180°F [82°C] in accordance with API Specification 10. The sample compositions comprised water, Class A CKD, Class A Portland cement, zeolite, vitrified shale, and hydrated lime. The vitrified shale used was "PRESSUR-SEAL^{®} FINE LCM" material. The amount of each component was varied as shown in the table below.

The results of the compressive strength tests are set forth in the table below.

**TABLE 18**

| **Unfoamed Compressive Strength Tests: Class A Cement, Class A CKD, Zeolite, Shale, and Lime** | | | | | | | |
|---|---|---|---|---|---|---|---|
| **Sample** | **Density (ppg)** | **Portland Cement Class A** | **CKD Class A** | **Zeolite** | **Vitrified Shale¹** | **Hydrated Lime** | **24-Hour Compressive Strength at 180°F [82°C]** |
| | **[kg/m³]** | **(% by wt)** | **(% by wt)** | **(% by wt)** | **(% by wt)** | **(% by wt)** | **(psi) [MPa]** |
| No. 75 | 13.3 [1590] | 50 | 25 | 25 | 0 | 0 | 1,915 [13.20] |
| No. 76* | 12.75 [1528] | 50 | 25 | 12.5 | 12.5 | 0 | 2,190 [15.10] |
| | | | | | | | |
| | | | | | | | |
| No. 79* | 12.5 [1500] | 25 | 50 | 12.5 | 12.5 | 0 | 923 [6.36] |
| No. 80* | 11.5 [1380] | 0 | 70 | 10 | 15 | 5 | 116.4 [0.803] |

| | | | | | | | |
|---|---|---|---|---|---|---|---|
| ¹ The vitrified shale used was "PRESSUR-SEAL^{®} FINE LCM" material. *Samples 76, 79 and 80 are comparative only | | | | | | | |

### EXAMPLE 19

Comparative Foamed Sample Composition No. 81 was prepared in accordance with the following procedure. A base sample composition was prepared that comprised water, Class A Portland cement, Class A CKD, and zeolite. This base sample had a density of 14.2 ppg [1700 kg/m³]. "ZONESEAL^{®} 2000" foaming additive was then added in an amount of 2% bvow. Next, the base sample was foamed down to about 12 ppg [1400 kg/m³]. After preparation, the resulting Foamed Sample Composition was subjected to a 72-hour compressive strength test at 140°F [60°C] in accordance with API Specification 10.

The result of the compressive strength test is set forth in the table below.

**TABLE 19**

| **Foamed Compressive Strength Tests: Class A Cement, Class A CKD, and Zeolite** | | | | | | |
|---|---|---|---|---|---|---|
| **Sample** | **Base Density (ppg)** | **Foam Density (ppg)** | **Portland Cement Class A** | **CKD Class A** | **Zeolite** | **72-Hour Compressive Strength at 140°F [60°C]** |
| | **[kg/m³]** | **[kg/m³]** | **(%** by **wt)** | **(%** by **wt)** | **(% by wt)** | **(psi) [MPa]** |
| No. 81 | 13.35 [1600] | 12 [1400] | 50 | 25 | 25 | 972 [6.70] |

### EXAMPLE 20

Comparative Sample Composition No. 82 was prepared at room temperature and subjected to a 24-hour compressive strength test at 180°F [82°C] in accordance with API Specification 10. Sample Composition No. 82 comprised water, Portland Class H Cement, Class H CKD, Zeolite, and vitrified shale. The vitrified shale used was "PRESSUR-SEAL^{®} FINE LCM" material.

The result of the compressive strength test is set forth in the table below.

**TABLE 20**

| **Unfoamed Compressive Strength Tests: Class H Cement, Class H CKD, Zeolite and Shale** | | | | | | |
|---|---|---|---|---|---|---|
| **Sample** | **Density (ppg)** | **Portland Cement Class H** | **CKD Class H** | **Zeolite** | **Vitrified Shale¹** | **24-Hour Compressive Strength at 180°F [82°C]** |
| | **[kg/m³]** | **(% by wt)** | **(% by wt)** | **(% by wt)** | **(% by wt)** | **(psi) [MPa]** |
| No. 82 | 15.2 [1820] | 50 | 25 | 12.5 | 12.5 | 2,280 [15.72] |

| | | | | | | |
|---|---|---|---|---|---|---|
| ¹ The vitrified shale used was "PRESSUR-SEAL^{®} FINE LCM" material. | | | | | | |

### EXAMPLE 21

Comparative Sample Composition No. 83 was prepared at room temperature and subjected to thickening time and fluid loss tests at 140°F [60°C] in accordance with API Specification 10. Sample Composition No. 83 comprised Class A Portland Cement (50% by weight), Class A CKD (25% by weight), zeolite (12.5% by weight), vitrified shale (12.5% by weight), "HALAD^{®} 23" fluid loss control additive (.75% by weight), and "HR^{®}-5" set retarder (0.5% by weight). This Sample had a density of 12.75 ppg [1528 kg/m³]. The vitrified shale used was "PRESSUR-SEAL^{®} FINE LCM" material.

The results of the fluid loss and thickening time tests are set forth in the table below.

**TABLE 21**

| **Unfoamed Thickening Time and Fluid Loss Tests: Class A Cement, Class A CKD, Zeolite and Shale** | | | | | | |
|---|---|---|---|---|---|---|
| **Sample** | **Portland Cement Class A** | **CKD Class A** | **Zeolite (% by** | **Vitrified Shale¹** | **Thickening Time to 70 BC at 140°F [60°C]** | **Fluid Loss in 30 min at 140°F[60°C]** |
| | **(% by wt)** | **(% by wt)** | **wt)** | **(% by wt)** | **(min:hr)** | **(ml)** |
| No. 83 | 50 | 25 | 12.5 | 12.5 | 8:54 | 196 |

| | | | | | | |
|---|---|---|---|---|---|---|
| ¹ The vitrified shale used was "PRESSUR-SEAL^{®} FINE LCM" material. | | | | | | |

Accordingly, Examples 18-21 indicate that foamed and unfoamed settable compositions comprising Portland cement, CKD, zeolite, and optionally vitrified shale may have suitable compressive strengths for a particular application.

### EXAMPLE 22

A series of comparative sample settable compositions were prepared at room temperature and subjected to 24-hour compressive strength tests at 190°F [88°C] in accordance with API Specification 10. The comparative sample compositions comprised water, slag cement, Class H CKD, Class H Portland cement, sodium carbonate, and hydrated lime. The slag cement contained sodium carbonate in an amount of 6% by weight. The amount of each component was varied as shown in the table below.

The results of the compressive strength tests are set forth in the table below.

**TABLE 22**

| **Unfoamed Compressive Strength Tests: Class H Cement, Class H CKD, Slag Cement, and Lime** | | | | | | |
|---|---|---|---|---|---|---|
| **Sample** | **Density** | **Portland Cement Class H** | **CKD Class H** | **Slag Cement** | **Hydrated Lime** | **24-Hour Compressive Strength at 190°F [88°C]** |
| | **(ppg)** | **(% by wt)** | **(% by wt)** | **(% by wt)** | **(% by wt)** | **(psi) [MPa]** |
| No. 84 | 13.2 (1580) | 0 | 50 | 45 | 5 | 123.6 [0.8522] |
| No. 85 | 13.6 (1630) | 0 | 50 | 50 | 0 | 170.3 [1.174] |
| No. 86 | 14 (1700) | 30 | 50 | 20 | 0 | 183.2 [1.263] |
| No. 87 | 15 (1800) | 30 | 20 | 50 | 0 | 563 [3.882] |

### EXAMPLE 23

A series of comparative foamed sample settable compositions were prepared at room temperature and subjected to 72-hour compressive strength tests at 140°F [60°C] in accordance with API Specification 10. For each sample, a base sample composition comprised water, slag cement, Class H CKD, Class H Portland cement, and hydrated lime. The amount of each component was varied as shown in the table below. The slag cement contained sodium carbonate in an amount of 6% by weight. "ZONESEAL^{®} 2000" foaming additive was then added to each base sample composition in an amount of 2% bvow. Next, each base sample composition was foamed down to about 11 ppg [1300 kg/m³]. After preparation, the resulting Foamed Sample Composition was subjected to a 72-hour compressive strength test at 140°F [60°C] in accordance with API Specification 10.

The result of the compressive strength tests are set forth in the table below.

**TABLE 23**

| **Foamed Compressive Strength Tests: Class H Cement, Class H CKD, Slag Cement, and Lime** | | | | | | | |
|---|---|---|---|---|---|---|---|
| **Sample** | **Base Density (ppg)** | **Foam Density (ppg)** | **Portland Cement Class H** | **CKD Class H** | **Slag Cement** | **Hydrated Lime** | **72-Hour Compressive Strength at 140°F [60°C]** |
| | **[kg/m³]** | **[kg/m³]** | **(% by wt)** | **(% by wt)** | **(% by wt)** | **(% by wt)** | **(psi) [MPa]** |
| No. 88 | 13.63 [1633] | 11 [1300] | 0 | 50 | 45 | 5 | 148.9 [1.027] |
| No. 89 | 13.68 [1639] | 11 [1300] | 0 | 50 | 50 | 0 | 161.1 [1.111] |
| No. 90 | 14.07 [1686] | 11 [1300] | 30 | 50 | 20 | 0 | 125 [0.862] |

Accordingly, Examples 22-23 indicate that foamed and unfoamed settable compositions comprising CKD, slag cement, optionally hydraulic cement, and optionally hydrated lime may have suitable compressive strengths for a particular application.

### EXAMPLE 24

A series of comparative sample settable compositions were prepared at room temperature and subjected to 24-hour compressive strength tests at 180°F [82°C] in accordance with API Specification 10. The sample compositions comprised water, Portland Cement, CKD, metakaolin, and vitrified shale. The amount of each component was varied as shown in the table below. The vitrified shale used was "PRESSUR-SEAL^{®} FINE LCM" material. Class A Portland Cement was used for this series of tests, except that Class H Portland Cement was used in Sample No. 93. Class A CKD was used for this series of tests, except that Class H CKD was used in Sample No. 93.

The results of the compressive strength tests are set forth in the table below.

**TABLE 24**

| **Compressive Strength Tests: Cement CKD, Metakaolin, and Shale** | | | | | | |
|---|---|---|---|---|---|---|
| **Sample** | **Density (ppg)** | **Portland Cement (% by wt)** | **CKD** | **Metakaolin** | **Vitrified Shale¹** | **24-Hour Compressive Strength at 180°F [82°C]** |
| | **[kg/m³]** | **[kg/m³]** | **(% by wt)** | **(% by wt)** | **(% by wt)** | **(psi)** |
| No. 91 | 12.75 [1528] | 50 | 25 | 12.5 | 12.5 | 1,560 [10.76] |
| No. 92 | 13.5 [1620] | 50 | 25 | 25 | 0 | 1,082 [7.460] |
| No. 93 | 13 [1600] | 25 | 50 | 12.5 | 12.5 | 1,410 [9.72] |

| | | | | | | |
|---|---|---|---|---|---|---|
| ¹ The vitrified shale used was "PRESSUR-SEAL^{®} FINE LCM" material. | | | | | | |

### EXAMPLE 25

A series of comparative foamed sample settable compositions were prepared at room temperature and subjected to 72-hour compressive strength tests at 180°F [82°C] in accordance with API Specification 10. For each sample, a base sample composition was prepared that comprised water, Portland Cement, CKD, metakaolin, and vitrified shale. The amount of each component was varied as shown in the table below. The vitrified shale used was "PRESSUR-SEAL^{®} FINE LCM" material. Class A Portland Cement was used for this series of tests, except that Class H Portland Cement was used in Sample No. 96. Class A CKD was used for this series of tests, except that Class H CKD was used in Sample No. 96. "ZONESEAL^{®} 2000" foaming additive was then added to each base sample composition in an amount of 2% bvow. Next, each base sample composition was foamed down to the density shown in the table below.

The results of the compressive strength tests are set forth in the table below.

**TABLE 25**

| **Foamed Compressive Strength Tests: Cement, CKD, Metakaolin, and Shale** | | | | | | | |
|---|---|---|---|---|---|---|---|
| **Sample** | **Base Density (ppg)** | **Foam Density (ppg)** | **Portland Cement** | **CKD** | **Metakaolin** | **Vitrified Shale¹** | **72-Hour Compressive Strength at 180°F [82°C]** |
| | **[kg/m³]** | **[kg/m³]** | **(% by wt)** | **(% by wt)** | **(% by wt)** | **(% by wt)** | **(psi) [MPa]** |
| No. 94 | 12.75 [1528] | 9.85 [1180] | 50 | 25 | 12.5 | 12.5 | 651 [4.49] |
| No. 95 | 13.5 [1620] | 9.84 [1180] | 50 | 25 | 25 | 0 | 512 [3.53] |
| No. 96 | 13 [1600] | 9.57 [1150] | 25 | 50 | 12.5 | 12.5 | 559 [3.85] |

| | | | | | | | |
|---|---|---|---|---|---|---|---|
| ¹ The vitrified shale used was "PRESSUR-SEAL^{®} FINE LCM" material. | | | | | | | |

Accordingly, the examples indicate that foamed settable compositions according to claim 1 may have suitable compressive strengths for a particular application.

Therefore, the present invention is well adapted to attain the ends and advantages mentioned as well as those that are inherent therein. The terms in the claims have their plain, ordinary meaning unless otherwise explicitly and clearly defined by the patentee. It will be appreciated that the invention may be modified within the scope of the appended claims.

## Claims

1. A settable composition comprising:
water;
Class A cement kiln dust, wherein the cement kiln dust is present in the settable composition in an amount of 25% by weight of dry components in the settable composition;
Class A Portland cement wherein the Portland cement is present in the settable composition in an amount of 50% by weight of dry components in the settable composition; and
zeolite, wherein the zeolite is present in the settable composition in an amount of 25% by weight of dry components in the settable composition
and wherein the settable composition has a density of 13.3 ppg (1600 kg/m³).

## Patentansprüche

1. Abbindbare Zusammensetzung, umfassend:
Wasser;
Zementofenstaub der Klasse A, wobei der Zementofenstaub in der abbindbaren Zusammensetzung in einer Menge von 25 Gew.% der Trockenkomponenten in der abbindbaren Zusammensetzung vorhanden ist;
Portlandzement der Klasse A, wobei der Portlandzement in der abbindbaren Zusammensetzung in einer Menge von 50 Gew.% der Trockenkomponenten in der abbindbaren Zusammensetzung vorhanden ist; und
Zeolith, wobei der Zeolith in der abbindbaren Zusammensetzung in einer Menge von 25 Gew.% der Trockenkomponenten in der abbindbaren Zusammensetzung vorhanden ist,
und wobei die abbindbare Zusammensetzung eine Dichte von 13,3 ppg (1600 kg/m³) hat.

## Revendications

1. Composition durcissable, comprenant :
de l'eau ;
de la poussière de classe A de four à ciment, la poussière de four à ciment étant présente dans la composition durcissable à hauteur de 25 % en poids de composants secs dans la composition durcissable ;
du ciment Portland de classe A, le ciment Portland étant présent dans la composition durcissable à hauteur de 50 % en poids de composants secs dans la composition durcissable ; et
de la zéolite, la zéolite étant présente dans la composition durcissable à hauteur de 25 % en poids de composants secs dans la composition durcissable
la composition durcissable ayant une densité de 13,3 ppg (1 600 kg/m³).
